# EUROPÄISCHE PATENTSCHRIFT

(11) **EP 3 287 315 B1**
(45) Veröffentlichungstag und Bekanntmachung des Hinweises auf die Patenterteilung: **07.10.2020**
(21) Anmeldenummer: 17187949.7
(22) Anmeldetag: 25.08.2017
(51) Int. Cl.: B60P 3/41, B60P 1/54

(54) **FORSTANHÄNGER**
FOREST TRAILER
REMORQUE FORESTIÈRE

(30) Priorität: 26.08.2016 AT 507642016
(43) Veröffentlichungstag der Anmeldung: 28.02.2018
(73) Patentinhaber: Steindl Krantechnik Gesellschaft m.b.H., 5061 Elsbethen (AT)
(72) Erfinder: STEINDL, Georg, 5061 Elsbethen (AT)
(74) Vertreter: Torggler & Hofinger Patentanwälte

(56) Entgegenhaltungen:
- EP-A1- 2 910 112
- DE-A1- 2 845 801
- DE-U1-202012 102 173
- DE-U1-202013 007 595
- US-A1- 2010 104 406

## Beschreibung

Die vorliegende Erfindung betrifft einen Forstanhänger zum Transport land- oder forstwirtschaftlicher Güter mit den Merkmalen des Oberbegriffs des Anspruchs 1. Die EP 2 910 112 A1 offenbart einen solchen Forstanhänger.

Gattungsgemäße Forstanhänger sind als Forstanhänger Palms 9S am Markt erhältlich. Deren Mono-Rahmen besteht aus einem durchgehenden zentralen 4-Kant Profil, welches jedoch im Bereich des Kranes mit einer aufwendigen Konstruktion (Verstärkungen mittels Platten, Verstrebung oder eigenem Krangrundgestell) ausgestattet werden muss, damit der Rahmen die Kräfte der Kranbewegungen aufnehmen kann. Zudem sind die Halterungen (Rungenbänke) für die Rungen, welche zum Halten der wirtschaftlichen Güter dienen, relativ aufwendig.

Bekannt sind auch Forstanhänger in Doppel-Rahmen-Bauweise, wobei der grundsätzliche Aufbau meist aus zwei Profil-Rohren (4-Kant), welche als Grundrahmen dienen, besteht. Beide Formrohre müssen jedoch über die gesamte Länge in regelmäßigen Abständen miteinander verbunden werden, damit genügend Stabilität gegeben ist. Im Bereich des Kranes ist eine Montageplatte vorzusehen, damit dieser daran montiert werden kann. Insgesamt handelt es sich bei der Doppel-Rahmen-Bauweise aber eher um eine aufwändige Bauform.

Bekannt sind weiterhin Forstanhänger, welche jenen Teil des Längsholms, an welchem die Rungen befestigt sind mit achteckigem Querschnitt ausgeführt sind (erhältlich als FARMA Generation 2 trailer CT 7,0-10 G2). Bis auf die grundsätzliche Profilform (8-Kant) im Bereich der Rungen unterscheidet sich dieser Forstanhänger jedoch nicht von herkömmlichen Forstanhängern in Mono-Rahmen-Bauweise. Sowohl die aufwendigen Rungenbänke samt Rungen als auch eine komplizierte und daher aufwändige Konstruktion für die Befestigungsplattform für den Kran lösen die grundsätzlichen Probleme des Mono-Rahmens nicht.

Im Stand der Technik, wie beispielsweise aus der DE 2845801 A1, sind auch Forstanhänger ohne Befestigungsplattform bekannt. Eine stabile Ausführung einer Befestigung eines Krans - und die Befestigung selbst - an einem solchen Forstanhänger gestaltet sich entsprechend aufwändig.

Aufgabe der Erfindung ist es daher einen im Vergleich zum Stand der Technik einfacher ausgeführten Forstanhänger in Mono-Rahmen-Bauweise bereitzustellen.

Diese Aufgabe wird durch die Merkmale des Anspruchs 1 gelöst, indem der Längsholm als Befestigungsplattform für den Kran fungiert. Mit anderen Worten ausgedrückt wird die Befestigungsplattform - vorzugsweise ausschließlich - durch den Längsholm gebildet, wodurch eine in den Längsholm integrierte Befestigungsplattform geschaffen ist. Dies wird durch eine Querschnittsform des Längsholms mit mindestens vier (aber auch fünf, sechs, sieben usw.) Ecken erreicht. Es ist offensichtlich, dass durch den Wegfall der komplexen Konstruktionen, die im Stand der Technik notwendig waren, um den Kran tragend zu befestigen, eine viel einfachere Konstruktion des Forstanhängers möglich wird. Zusätzlich wird eine stabilere Konstruktion erreicht, da der Längsholm die für die Befestigungsplattform notwendige Stabilität mit nutzen kann.

Es ist darauf hinzuweisen, dass der Längsholm mehrlagig ausgeführt sein kann, das heißt, der Längsholm kann durch mehrere Lagen - beispielsweise Stahl-Blech - gebildet sein. Dabei kann eine äußere Lage hülsenartig über eine innere Lage gestülpt sein. Dies muss nicht über die ganze Länge des Längsholms der Fall sein. Beispielsweise kann ein stärker belasteter Bereich (zum Beispiel im Bereich der Befestigungsplattform für den Kran) mit mehreren Lagen ausgestattet sein als andere Abschnitte. Die entsprechenden äußeren Lagen müssen auch nicht den vollen Umfang der inneren Lage bedecken. Es können beispielsweise nur einzelne oder mehrere Flächen der inneren Lage(n) mit einer oder mehreren weiteren Lagen bedeckt sein.

Eine Verstärkung des Längsholms kann auch mittels einer Verdickung der Wandstärke des Längsholms in dem zu verstärkenden Bereich erfolgen. So können unterschiedliche Wandstärken durch eine mehrlagige Ausbildung des Längsholms oder eine Verdickung der Wandstärke ausgebildet sein.

Erfindungsgemäße Forstanhänger können zum Transport wirtschaftlicher Güter, wie beispielsweise Baumstämme, (Press-)Ballen, Äste und dergleichen, verwendet werden.

Der durchgehende Querschnitt kann sich bis über die Gesamtheit der Rungen erstrecken.

Weitere vorteilhafte Ausgestaltungen der Erfindung sind in den Unteransprüchen definiert.

Der Querschnitt kann die Form eines sechseckigen Polygons haben. Dies hat sich in der Praxis als besonders vorteilhaft herausgestellt. Aber auch Querschnitte mit sieben Ecken haben sich in Untersuchungen der Anmelderin als durchaus vorteilhaft herausgestellt.

Die Befestigungsplattform kann - vorzugsweise ausschließlich - durch eine Oberseite des Längsholms gebildet sein.

Die Rungen können so an einer in Bezug auf die Vertikale einen Anstellwinkel aufweisenden und nach unten weisenden Fläche des Längsholms befestigt sein, dass der Anstellwinkel der Fläche eine Steigung eines unteren Endbereichs der Rungen festlegt. Der untere Endbereich der Rungen kann die Steigung aufweisen, die dem Anstellwinkel genau entspricht. Es ist aber auch möglich, den Anstellwinkel durch Abstandhalter oder Keile oder dergleichen zu modifizieren.

Dies stellt eine besonders einfache und elegante Möglichkeit zur Befestigung der Rungen dar. Insbesondere kommt man in diesem Fall ohne aufwändige und große Rungenhalter bzw. Querstreben aus.

Die Rungen können dabei mittels Befestigungselementen im Bereich einer nach außen weisenden Kante des Längsholms befestigt sein und an einer in Bezug auf die Vertikale einen Anstellwinkel aufweisenden und nach unten weisenden Fläche des Längsholms, welche vorzugsweise an die nach außen weisende Kante angrenzt, abstützen. Durch die Abstützung der Runge an einer Fläche, die ohnehin eine für die Runge gewünschte Steigung (oder zumindest eine ähnliche Steigung) aufweist, wird eine optimale Krafteinleitung von den Rungen in den Längsholm möglich.

Die Rungen können mit Laschen zusätzlich am Längsholm befestigt sein, welche Laschen einerseits mit einer Oberseite des Längsholms verbunden sind und andererseits oberhalb der nach außen weisenden Kante oder der nach unten weisenden Fläche mit den Rungen verbunden sind. Durch diese Maßnahme kann zum einen besonders einfach die Befestigung der Laschen am Längsholm verstärkt werden (nach Art einer Verstärkungsstrebe zwischen zwei Schenkeln). Andererseits kann durch die Laschen eine Ablagefläche für die Unterstützung der zu transportierenden wirtschaftlichen Güter geschaffen werden.

Zum Ziehen des Forstanhängers durch ein Zugfahrzeug (beispielsweise ein Traktor) kann an einem vorderen Ende des Forstanhängers eine Deichsel - vorzugsweise eine Knickdeichsel, welche in einer horizontalen und vertikalen Ebene knickbar ist - vorgesehen sein.

Am Längsholm können tragend gelagerte Rungen zum Halten der land- oder forstwirtschaftlichen Güter vorgesehen sein. Diese können geschwungen ausgeführt sein oder über Rungenbänke verfügen, welche dann meist senkrechte Rungen tragen.

Zwischen der Befestigungsplattform und den Rungen kann ein Frontgitter (auch bezeichnet als Prallgitter) vorgesehen sein, um den Kran (oder andere Elemente des Forstanhängers oder eines Zugfahrzeugs) vor den transportierten land- oder forstwirtschaftlichen Gütern zu schützen, wenn während des Transports beispielsweise Erschütterungen auftreten, welche die Güter in Richtung des Krans treiben.

Die Erfindung ermöglicht es in einer bevorzugten Ausführungsform das Frontgitter direkt mit dem Längsholm zu verschrauben, was eine besonders einfache Ausführung zur Folge hat.

Um den Einsatzbereich des Krans im Feld zu verbessern, kann zwischen der Befestigungsplattform und den Rungen eine Abstützung - insbesondere eine Flap-Down-Abstützung - vorgesehen sein. Denn durch eine Abstützung können Kippmomente, die während des Einsatzes des Krans auftreten, aufgenommen und dadurch ein Umfallen des Forstanhängers verhindert werden.

Flap-Down-Abstützungen verfügen über zumindest einen Arm (vorzugsweise zwei oder mehr), welche verschwenkbar sind. Durch Herabschwenken ("flap down") am Einsatzort wirkt der Arm als Stütze. Für den Einsatz bei Forstanhängern sind einfache Flap-Down-Stützen gut geeignet. Natürlich können auch andere Stützen zum Einsatz kommen. Flap-Down-Abstützungen können hydraulisch ausgeführt sein.

Die zumindest eine Achse, welche zur Lagerung von Rädern vorgesehen ist, kann als Boggie-Achse (auch bezeichnet als Pendelaggregat oder Doppelachsaggregat) ausgeführt sein. Dadurch können besonders große Unebenheiten, hervorgerufen durch Baumstümpfe, Erdhügel und dergleichen, wie sie im land- und forstwirtschaftlichen Betrieb auftreten, gut ausgeglichen werden.

In einer besonders bevorzugten Ausführungsform ist der Querschnitt zumindest von der Deichsel bis zur zumindest einen Achse durchgehend, d.h. im Wesentlichen unverändert. Die erfindungsgemäße Integration der Befestigungsplattform für den Kran sorgt nämlich für eine Stabilisierung des Längsholms insgesamt (beispielsweise durch Ausführung des Querschnitts als Vieleck oder durch Vergrößerung des Längsholms). Die zumindest eine Achse und die Deichsel bilden die Kontaktpunkte des Forstanhängers mit der Umgebung (in gewissen Situationen kommt noch eine Abstützung hinzu), wodurch der Kraftfluss im Längsholm durch die Gegebenheiten an der Deichsel und der zumindest einen Achse gegeben ist. Wie bereits erwähnt, kann die Verstärkung des Längsholms in der Verbindung der Deichsel und der zumindest einen Achse daher besonders ausgenutzt werden.

Bevorzugt kann es vorgesehen sein, dass zumindest eines - vorzugsweise sämtliche
- der folgenden tragend am Längsholm gelagert ist:
- Deichsel
- Rungen
- Frontgitter
- Abstützung
Durch die erfindungsgemäße Ausgestaltung des Längsholms ist es möglich, die Krafteinleitung durch den Kran, die Rungen und die hier erwähnten Elemente zu optimieren. Dadurch ergibt sich eine stabilere Anbindung aller Elemente an den Längsholm und folglich eine insgesamt stabilere Bauweise des Forstanhängers.

Um den Einsatzbereich des Forstanhängers in Bezug auf die zu transportierenden Güter zu erweitern, kann eine Auszugsverlängerung - vorzugsweise in Form einer Teleskopierbarkeit des Längsholms - vorgesehen sein. Falls beispielsweise besonders lange Baumstämme zu transportieren sind, kann dies auch mit einem ansonsten weniger langen und im Verkehr einfacher zu bedienenden Forstanhänger mit Auszugsverlängerung geschehen. Eine teleskopierbare Auszugsverlängerung ist eine besonders einfache Ausgestaltung einer Auszugsverlängerung.

Die Verstärkung des Längsholms hat außerdem den Vorteil, dass gewisse Bauelemente innerhalb des Längsholms angeordnet werden können. Dies betrifft beispielsweise Leitungen - insbesondere Hydraulikleitungen und/oder elektrische Leitungen - und/oder eine Anlenkung einer Deichsel. Diese Elemente sind dann besonders gut geschützt vor äußeren Einflüssen und der vorhandene Bauraum wird sehr gut ausgenützt.

Besonders bevorzugt kann eine Ausführungsform sein, bei welcher der Querschnitt des Längsholms von einem vorderen bis zu einem hinteren Ende des Längsholms durchgehend ist. Da dann keine Wechsel des Querschnitts auftreten, stellt dies für die Herstellung eine besonders einfache Ausführung dar.

Schutz wird ebenfalls für erfindungsgemäße Forstanhänger mit einem Kran begehrt, wobei der Kran an der Befestigungsplattform befestigt und tragend gelagert ist. Beispiele für Kräne die mit der Erfindung eingesetzt werden können sind Forstkräne oder Traktorkräne. (Als Forstkräne werden Kräne bezeichnet, die im Unterschied zu Traktorkränen kein eigenes Gestell aufweisen.)

Weitere Vorteile und Einzelheiten der Erfindung ergeben sich anhand der Figuren sowie der dazugehörigen Figurenbeschreibung. Dabei zeigen:
- Fig.1 und 2: zwei perspektivische Darstellungen eines erfindungsgemäßen Forstkrans,
- Fig. 3a und 3b: eine Seitendarstellung und eine Draufsicht eines Längsholms gemäß der Erfindung,
- Fig. 4: eine Schnittdarstellung durch die Ebene A-A aus Fig. 3b,
- Fig. 5a und 5b: Darstellungen analog zu den Fig. 3a und 3b zur Verdeutlichung der Auszugsverlängerung sowie
- Fig. 6 und 7: perspektivische Darstellungen eines Längsholms gemäß der Erfindung.

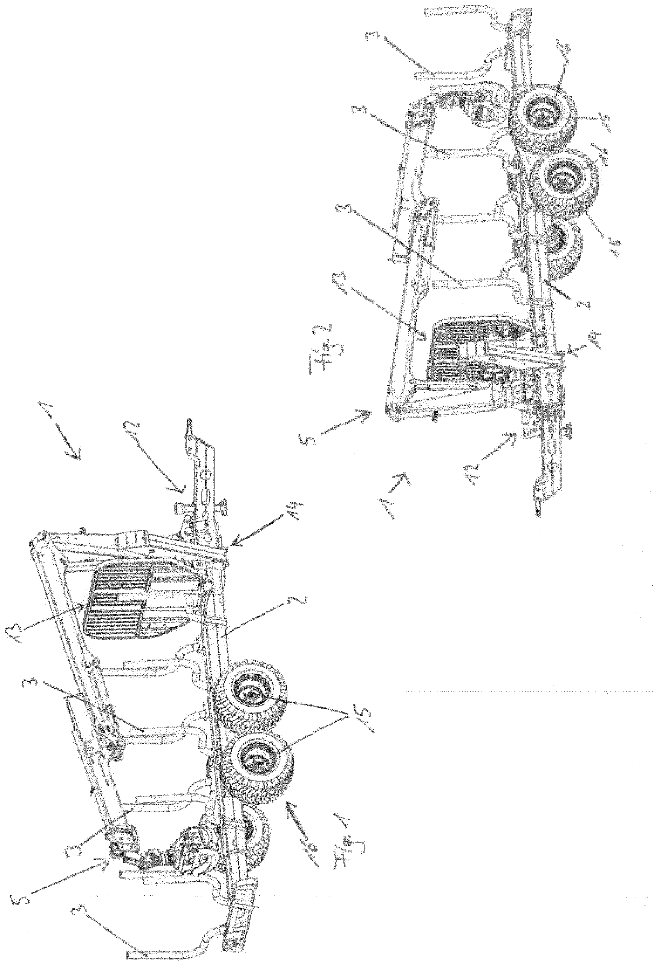

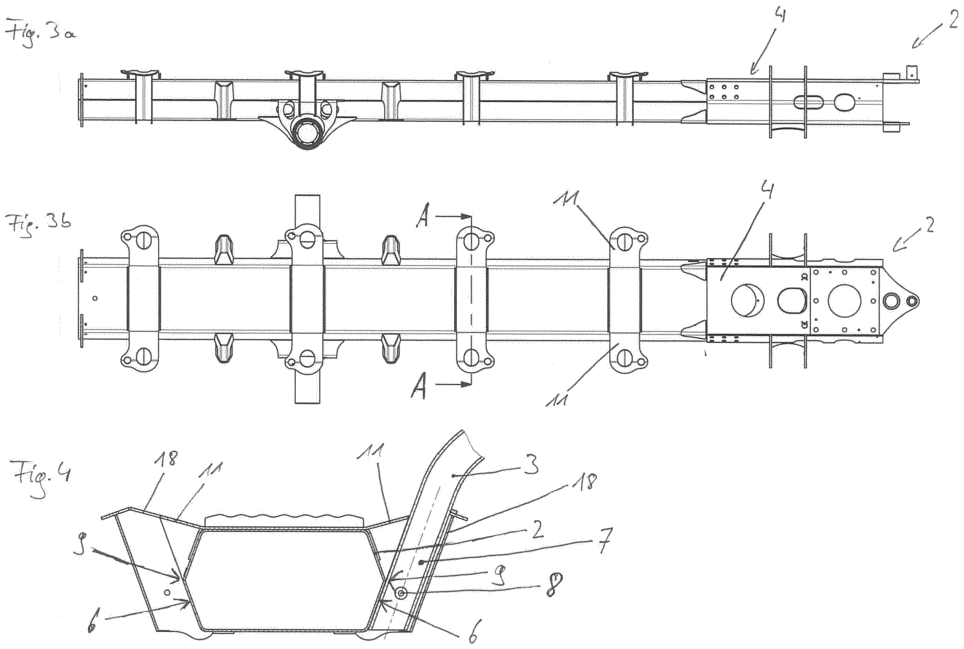

In den Fig. 1 und 2 ist ein Ausführungsbeispiel eines erfindungsgemäßen Forstanhängers 1 perspektivisch dargestellt. Zu erkennen ist jeweils der zentrale Längsholm 2, an welchem mehrere Paare von Rungen 3 montiert sind. Des Weiteren ist am Längsholm 2 ein Kran 5 tragend befestigt, welcher zum Be- und Entladen des Forstanhängers 1 dienen kann. Zur Befestigung des Krans 5 über die Befestigungsplattform 4 sei auf die Figuren 3a, 3b, 5a, 5b, 6 und 7 verwiesen. Der Längsholm 2 besitzt in diesem Ausführungsbeispiel einen sechseckigen Querschnitt, welcher von der (in einer horizontalen Ebene knickende) Deichsel 12 bis zum hinteren Ende des Forstanhängers 1 durchgeht (d.h. der Querschnitt des Längsholms ändert sich über die Länge des Längsholms im Wesentlichen nicht).

Die Rungen 3 sind S-förmig nach außen geschwungen, um so viel Laderaum wie möglich für wirtschaftliche Güter zu erzeugen. Es ist ein Frontgitter 13 vorgesehen, um zu verhindern, dass Ladegut zu weit nach vorne gelangt und beispielsweise den Kran 5 beschädigen kann.

Achsen 15 sind am Längsholm 2 tragend gelagert. Die Achsen 15 sind in diesem Fall paarweise zusammengefasst schwenkbar gelagert (Boggie-Achse), um das Überfahren von großen Unebenheiten, wie Baumstümpfen, zu ermöglichen.

Durch den im Vergleich zum Stand der Technik vergrößerten Längsholm 2 können beispielsweise Anlenkungen für die Deichsel 12 inklusive Deichselzylindern und (in diesem Fall geteilte) Bolzen der Knickdeichsel innerhalb des Längsholms 2 angeordnet werden. Im vorliegenden Ausführungsbeispiel sind außerdem Leitungen wie elektrische Leitungen, hydraulische Leitungen, Saugschläuche usw. innerhalb des Längsholms 2 angeordnet.

Es ist eine Abstützung 14 vorgesehen, welche als Flap-Down-Abstützung ausgeführt ist. Sie verfügt über zwei schwenkbare Arme, welche zu beiden Seiten des Forstanhängers 1 herabgeschwenkt werden können. Beim Einsatz des Krans können zu große Kippmomente durch die Abstützung 14 kompensiert und so das Umfallen des Forstanhängers 1 verhindert werden.

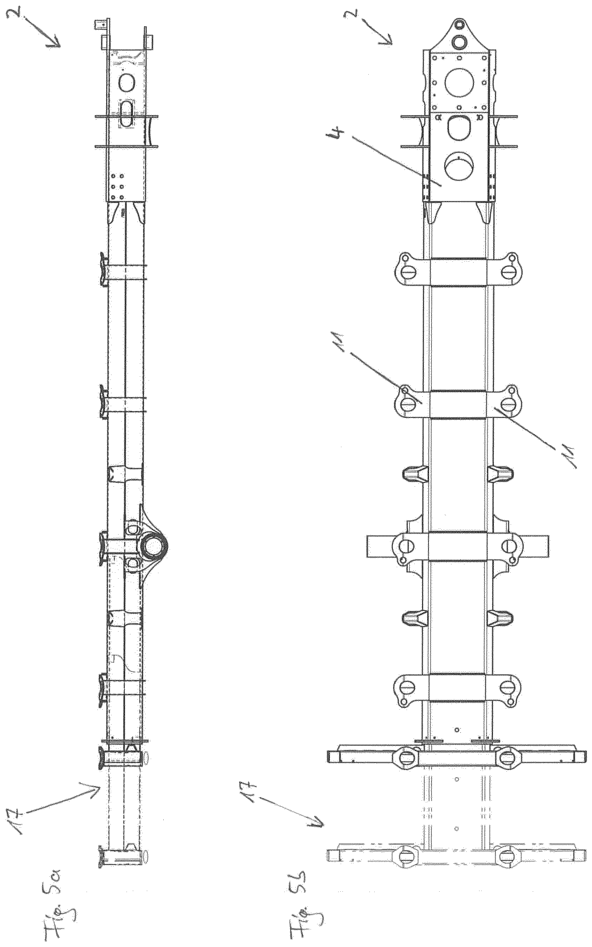

Der Forstanhänger 1 verfügt außerdem über eine Ausziehverlängerung 17, welche in den Fig. 5a und 5b in ausgezogener Stellung dargestellt ist.

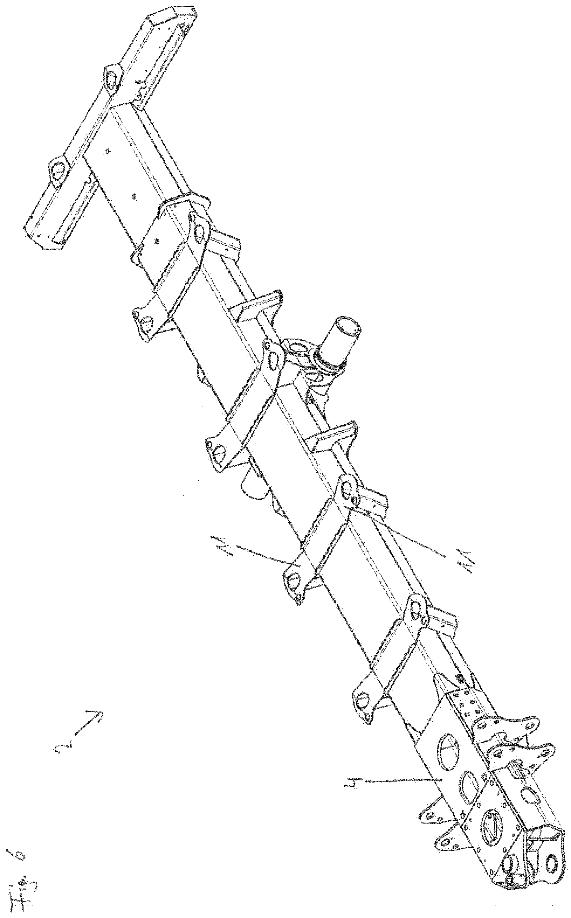

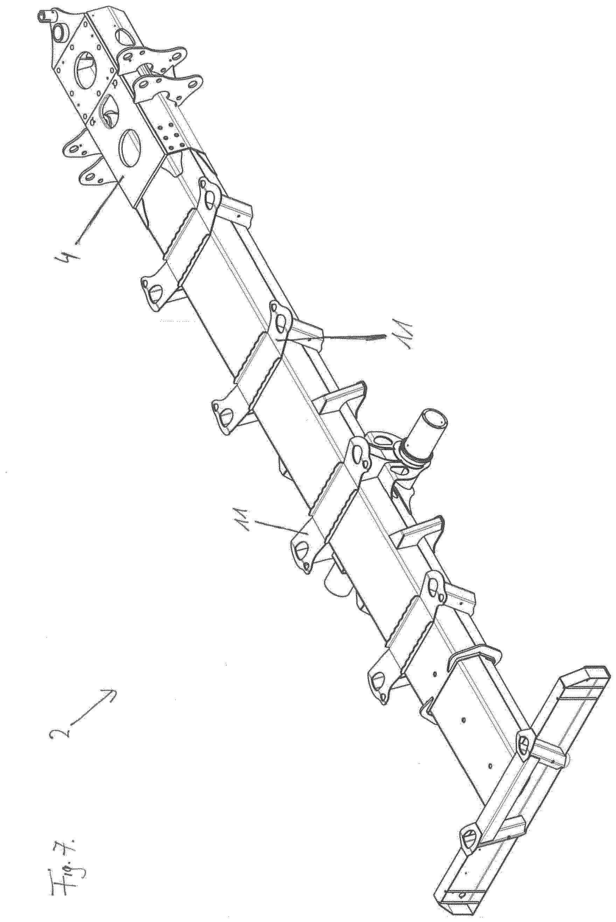

In den Fig. 3a und 3b ist der Längsholm 2 von oben (Fig. 3b) und von der Seite (Fig. 3a) dargestellt. In den Figuren 6 und 7 ist der Längsholm 2 in zwei perspektivischen Ansichten dargestellt. Zu erkennen ist jeweils die Befestigungsplattform 4, welche in Längsholm 2 integriert ist, was eine besonders einfache und effektive Anbindung des Krans 5 an den Längsholm 2 erlaubt.

Die Befestigung des Krans 5 an der Befestigungsplattform 4 ist in diesem Ausführungsbeispiel erfindungsgemäß über Verschraubungen gelöst.

Im Bereich der Befestigungsplattform 4 ist der Längsholm 2 mehrlagig ausgeführt, um eine Verstärkung des Längsholms 2 im Bereich des Krans 5 zu erreichen.

Des Weiteren sind entsprechende Befestigungselemente 8 für die tragende Lagerung der Achsen 15 und der Rungen 3 (inklusive der Laschen 11) zu erkennen. Die Befestigung der Rungen 3 wird im Folgenden in Verbindung mit Fig. 4 erläutert.

Fig. 4 zeigt einen Querschnitt durch den Längsholm 2 durch die Ebene A-A aus Fig. 3b, wobei der sechseckige Querschnitt des Längsholms 2 schön zu erkennen ist.

Zu erkennen sind außerdem eine (im Bild rechts angeordnete) Runge 3 und Rungenhalter (auf beiden Seiten des Längsholms 2), wobei die Rungen 3 mittels der Rungenhalter direkt am Längsholm 2 befestigt sind.

Durch die Abstützung an der Fläche 6 einerseits und die Zugbelastung der Laschen 11 kann das Drehmoment, welches unter Belastung auf die Rungen 3 wirkt, auf einfache Weise ideal in den Längsholm 2 eingeleitet werden.

Der Übersichtlichkeit halber sind in den Figuren nicht alle Rungen 3 und Laschen 11 mit Bezugszeichen versehen.

## Patentansprüche

1. Forstanhänger zum Transport von land- oder forstwirtschaftlichen Gütern mit
- einem zentralen Längsholm (2),
- zumindest einer am Längsholm (2) tragend gelagerten Achse (15) und
- einer Befestigungsplattform (4), geeignet zum Befestigen und Tragen eines Krans (5),
wobei sich der Längsholm (2) mit einem durchgehenden Querschnitt zumindest von der Befestigungsplattform (4) bis zur zumindest einen Achse (15) erstreckt, **dadurch gekennzeichnet, dass** der Längsholm (2) als Befestigungsplattform (4) fungiert, wobei eine Befestigung des Krans (5) an der Befestigungsplattform (4) über eine Verschraubung erfolgt und der Längsholm (2) im Bereich der Befestigungsplattform (4) zur Verstärkung des Längsholms (2) mehrlagig oder mit einer Verdickung ausgeführt ist und der durchgehende Querschnitt des Längsholms (2) über die Länge des Längsholms (2) im Wesentlichen unverändert ist, wobei der Längsholms (2) eine Querschnittsform mit mindestens vier, fünf, sechs, sieben usw. Ecken aufweist.

2. Forstanhänger nach Anspruch 1, **dadurch gekennzeichnet, dass** die Befestigungsplattform (4) - vorzugsweise ausschließlich - durch eine Oberseite des Längsholms (2) gebildet ist.

3. Forstanhänger nach Anspruch 1 oder 2, **dadurch gekennzeichnet, dass** an einem vorderen Ende des Forstanhängers (1) eine Deichsel (12) - vorzugsweise eine Knickdeichsel - vorgesehen ist.

4. Forstanhänger nach Anspruch 3, **dadurch gekennzeichnet, dass** der Querschnitt zumindest von der Deichsel (12) bis zur zumindest einen Achse (15) durchgehend ist.

5. Forstanhänger nach einem der Ansprüche 1 bis 4, **dadurch gekennzeichnet, dass** am Längsholm (2) tragend gelagerte Rungen (3) zum Halten der land- oder forstwirtschaftlichen Güter vorgesehen sind.

6. Forstanhänger nach Anspruch 5, **dadurch gekennzeichnet, dass** zwischen der Befestigungsplattform (4) und den Rungen (3) ein Frontgitter (13) vorgesehen ist.

7. Forstanhänger nach Anspruch 6, **dadurch gekennzeichnet, dass** das Frontgitter (13) direkt mit dem Längsholm (2) verschraubt ist.

8. Forstanhänger nach einem der Ansprüche 5 bis 7, **dadurch gekennzeichnet, dass** zwischen der Befestigungsplattform (4) und den Rungen (3) eine Abstützung (14) - insbesondere eine Flap-Down-Abstützung - vorgesehen ist.

9. Forstanhänger nach einem der Ansprüche 3 bis 8, **dadurch gekennzeichnet, dass** zumindest eines - vorzugsweise sämtliche - der folgenden tragend am Längsholm (2) gelagert ist:
- Deichsel (12)
- Frontgitter (13)
- Rungen (3)
- Abstützung (14)

10. Forstanhänger nach einem der Ansprüche 1 bis 9, **dadurch gekennzeichnet, dass** der Querschnitt des Längsholms (2) von einem vorderen bis zu einem hinteren Ende des Längsholms (2) durchgehend ist.

11. Forstanhänger nach einem der Ansprüche 1 bis 10, **dadurch gekennzeichnet, dass** der Forstanhänger (1) in Mono-Rahmen-Bauweise ausgeführt ist.

12. Forstanhänger nach einem der Ansprüche 1 bis 11, **dadurch gekennzeichnet, dass** eine Auszugsverlängerung (17) - vorzugsweise in Form einer Teleskopierbarkeit des Längsholms (2) - vorgesehen ist.

13. Forstanhänger nach einem der Ansprüche 1 bis 12, **dadurch gekennzeichnet, dass** Leitungen - insbesondere Hydraulikleitungen und/oder elektrische Leitungen - und/oder eine Anlenkung einer Deichsel (12) innerhalb des Längsholms (2) angeordnet sind.

14. Forstanhänger nach einem der Ansprüche 1 bis 13 mit einem Kran, wobei der Kran (5) an der Befestigungsplattform (4) befestigt und tragend gelagert ist.

## Claims

1. A forest trailer for transporting agricultural or forestry goods comprising
- a central longitudinal beam (2),
- at least one axle (15) mounted in supporting relationship on the longitudinal beam (2), and
- a fixing platform (4) suitable for fixing and carrying a crane (5),
wherein the longitudinal beam (2) extends with a continuous cross-section at least from the fixing platform (4) to the at least one axle (15),
**characterised in that** the longitudinal beam (2) functions as a fixing platform (4), wherein fixing of the crane (5) to the fixing platform (4) is effected by way of a screw connection and in the region of the fixing platform (4) the longitudinal beam (2) is of a multi-layer structure or is provided with a thickening for reinforcing the longitudinal beam (2) and the continuous cross-section of the longitudinal beam (2) is substantially unchanged over the length of the longitudinal beam (2), wherein the longitudinal beam (2) is of a cross-sectional shape having at least four, five, six, seven and so forth corners.

2. A forest trailer according to claim 1 **characterised in that** the fixing platform (4) is formed - preferably exclusively - by a top side of the longitudinal beam (2).

3. A forest trailer according to claim 1 or claim 2 **characterised in that** provided at a front end of the forest trailer (1) is a drawbar (12) - preferably an articulated drawbar.

4. A forest trailer according to claim 3 **characterised in that** the cross-section is continuous at least from the drawbar (12) to the at least one axle (15).

5. A forest trailer according to one of claims 1 to 4 **characterised in that** there are provided stanchions (3) mounted in supporting relationship to the longitudinal beam (2) for holding the agricultural or forestry goods.

6. A forest trailer according to claim 5 **characterised in that** a front grill (13) is provided between the fixing platform (4) and the stanchions (3).

7. A forest trailer according to claim 6 **characterised in that** the front grill (13) is screwed directly to the longitudinal beam (2).

8. A forest trailer according to one of claims 5 to 7 **characterised in that** provided between the fixing platform (4) and the stanchions (3) is a support means (14) - in particular a flap-down support means.

9. A forest trailer according to one of claims 3 to 8 **characterised in that** at least one - preferably all - of the following is mounted in supporting relationship on the longitudinal beam (2):
- drawbar (12)
- front grill (13)
- stanchions (3)
- support means (14).

10. A forest trailer according to one of claims 1 to 9 **characterised in that** the cross-section of the longitudinal beam (2) is continuous from a front to a rear end of the longitudinal beam (2).

11. A forest trailer according to one of claims 1 to 10 **characterised in that** the forest trailer (1) is of a mono-frame structural configuration.

12. A forest trailer according to one of claims 1 to 11 **characterised in that** there is provided an extension prolongation (17) - preferably in the form of telescope capability of the longitudinal beam (2).

13. A forest trailer according to one of claims 1 to 12 **characterised in that** lines - in particular hydraulic lines and/or electric lines - and/or a pivotal connection of a drawbar (12) are arranged within the longitudinal beam (2).

14. A forest trailer according to one of claims 1 to 13 comprising a crane, wherein the crane (5) is fixed to and mounted in supporting relationship on the fixing platform (4).

## Revendications

1. Remorque forestière pour le transport de produits agricoles ou forestiers avec
- un longeron (2) central,
- au moins un essieu (15) logé porteur au niveau du longeron (2) et
- une plateforme de fixation (4), adaptée pour fixer et porter une grue (5),
dans laquelle le longeron (2) s'étend avec une section transversale continue au moins de la plateforme de fixation (4) jusqu'à l'au moins un essieu (15), **caractérisée en ce que** le longeron (2) fonctionne comme plateforme de fixation (4), dans laquelle une fixation de la grue (5) au niveau de la plateforme de fixation (4) se fait par le biais d'un vissage et le longeron (2) est réalisé à plusieurs couches ou avec un épaississement dans la zone de la plateforme de fixation (4) pour renforcer le longeron (2) et la section transversale continue du longeron (2) est sensiblement inchangée sur la longueur du longeron (2), dans laquelle le longeron (2) présente une forme de section transversale avec au moins quatre, cinq, six, sept, etc. coins.

2. Remorque forestière selon la revendication 1, **caractérisée en ce que** la plateforme de fixation (4) est formée - de préférence exclusivement - par une face supérieure du longeron (2).

3. Remorque forestière selon la revendication 1 ou 2, **caractérisée en ce qu'**un timon (12) - de préférence un timon articulé - est prévu au niveau d'une extrémité avant de la remorque forestière (1).

4. Remorque forestière selon la revendication 3, **caractérisée en ce que** la section transversale est continue au moins du timon (12) jusqu'à l'au moins un essieu (15).

5. Remorque forestière selon l'une quelconque des revendications 1 à 4, **caractérisée en ce que** des ranchers (3) logés porteurs au niveau du longeron (2) sont prévus pour retenir les produits agricoles et forestiers.

6. Remorque forestière selon la revendication 5, **caractérisée en ce qu'**une grille avant (13) est prévue entre la plateforme de fixation (4) et les ranchers (3).

7. Remorque forestière selon la revendication 6, **caractérisée en ce que** la grille avant (13) est vissée directement avec le longeron (2).

8. Remorque forestière selon l'une quelconque des revendications 5 à 7, **caractérisée en ce qu'**un support (14) - en particulier un support flap-down - est prévu entre la plateforme de fixation (4) et les ranchers (3).

9. Remorque forestière selon l'une quelconque des revendications 3 à 8, **caractérisée en ce qu'**au moins un - de préférence tous - des suivants est logé porteur au niveau du longeron (2) :
- timon (12)
- grille avant (13)
- ranchers (3)
- support (14).

10. Remorque forestière selon l'une quelconque des revendications 1 à 9, **caractérisée en ce que** la section transversale du longeron (2) est continue d'une extrémité avant jusqu'à une extrémité arrière du longeron (2).

11. Remorque forestière selon l'une quelconque des revendications 1 à 10, **caractérisée en ce que** la remorque forestière (1) est réalisée en construction mono-cadre.

12. Remorque forestière selon l'une quelconque des revendications 1 à 11, **caractérisée en ce qu'**une rallonge d'extraction (17) - de préférence sous la forme d'une possibilité de télescopage du longeron (2) - est prévue.

13. Remorque forestière selon l'une quelconque des revendications 1 à 12, **caractérisée en ce que** des conduites - en particulier des conduites hydrauliques et/ou des conduites électriques - et/ou une articulation d'un timon (12) sont agencées à l'intérieur du longeron (2).

14. Remorque forestière selon l'une quelconque des revendications 1 à 13 avec une grue, dans laquelle la grue (5) est fixée et logée porteuse au niveau de la plateforme de fixation (4).
